# EUROPEAN PATENT APPLICATION

(11) **EP 3 386 055 A2**
(43) Date of publication of application: **10.10.2018**
(21) Application number: 18162919.7
(22) Date of filing: 20.03.2018
(51) Int. Cl.: H02H 7/00, H02P 29/60

(54) **DYNAMIC PARAMETER LIMITING BASED ON ASSET PERFORMANCE AND HEALTH STATUS**

(30) Priority: 03.04.2017 US 201715477787
(71) Applicant: GE Energy Power Conversion Technology Ltd, Rugby Warwickshire CV21 1BU (GB)
(72) Inventor: SIEMAN, Alexander Richard, Pittsburgh, PA 15238 (US); SOLOMON, Luke Anthony, Pittsburgh, PA 15238 (US); DOUCETTE, Michael Richard, Pittsburgh, PA 15238 (US)
(74) Representative: Fischer, Michael Maria

(57) **Abstract**

A system (100) that may include a controller coupled to an electric machine (102) is provided. The controller may be configured to receive status data from the electric machine (102) and perform a diagnostic test on the status and based on result of the diagnostic test, the controller can instruct a driver (108) of the electric machine (102) to alter a drive regimen of the electric machine (102).

## Description

### TECHNICAL FIELD

The present disclosure relates to electric machines and their controllers. More particularly, the present disclosure relates to dynamic parameter limiting based on asset performance and health status.

### BACKGROUND

Electric machine diagnostics and monitoring is commonly performed to identify the current health and performance status of an electric machine. When a fault condition is identified, however, no action is taken by a typical monitoring system except for the generation of a notification that the fault condition has occurred. While a service call may be scheduled to repair the identified condition, the scheduled shutdown time of the electric machine may not occur for several months after the fault is identified and the repair is planned.

In the time between the identification of the fault and when the machine is repaired, the electric machine is still expected to operate regardless of its health status; furthermore, due to the fault having occurred, the condition of the machine may worsen over time. As such, typical monitoring systems cannot prevent the overall degradation of an electric machine.

### SUMMARY

Given the aforementioned deficiencies, several embodiments are described herein that mitigate or solve the some of the problems in the art. For example, one embodiment provides a system that includes an electric machine and/or a controller coupled to the electric machine. The controller may be configured to receive status data from the electric machine and perform a diagnostics test on the status data. Based on results of the diagnostics test, the controller can instruct a driver of the electric machine to alter a drive regimen of the electric machine.

Another exemplary embodiment includes a system that comprises a set of electric machines in which each electric machine is connectable and is connected to either an electric grid or a driver. The system also includes a controller configured to receive status information from each electric machine in the set, and based on a diagnostics test on status information respective to a specified electric machine in the set, instruct the specified electric machine to disconnect from one of the electric grid and the driver and connect to the other one of the electric grid and the driver.

Another exemplary embodiment is a system that includes a processor and a memory. The latter may include instructions that, when executed by the processor, cause the processor to perform certain operations. The operations may include receiving status data from an electric machine, performing a diagnostics test on the status data, and/or instructing a driver of the electric machine to alter a control regimen of the electric machine based on results of the diagnostics test.

Additional features, modes of operations, advantages, and other aspects of various embodiments are described below with reference to the accompanying drawings. It is noted that the present disclosure is not limited to the specific embodiments described herein. These embodiments are presented for illustrative purposes. Additional embodiments, or modifications of the embodiments disclosed, will be readily apparent to persons skilled in the relevant art(s) based on the teachings provided.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are for purposes of illustrating the embodiments and are not to be construed as limiting the disclosure. Given the following enabling description of the drawings, the novel aspects of the present disclosure should become evident to a person of ordinary skill in the relevant art(s).
FIG. 1 illustrates a system in accordance with several aspects described herein.
FIG. 2 illustrates a system in accordance with several aspects described herein.
FIG. 3 illustrates a controller in accordance with several aspects described herein.
FIG. 4 depicts a flow chart of a method in accordance with several aspects described herein.
FIG. 5 depicts a flow chart of a method in accordance with several aspects described herein.

### DETAILED DESCRIPTION

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

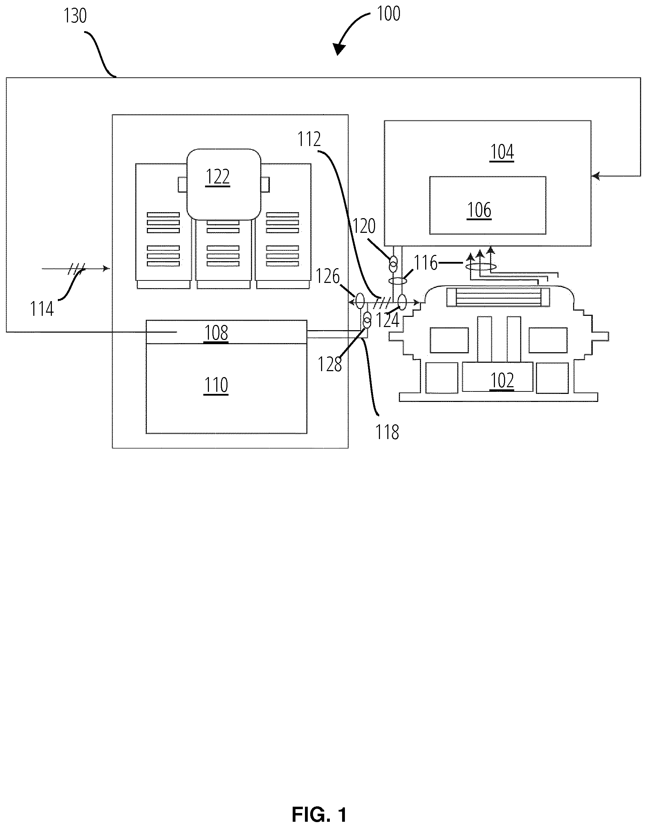

FIG. 1 illustrates a system 100 according to an embodiment. The system 100 includes an electric machine 102 that is controlled via a power converter 122. For example, and without limitation, the power converter 122 may be a variable frequency drive (VFD).

The power converter 122, powered via an electric supply 114, may drive the electric machine 102 by providing it current and voltage, in addition to other control commands, via a plurality of wires that form a power bus 112. The currents and voltages are respectively measured by a current sensor 120 and a voltage sensor 124. The voltage and current are supplied to the power bus 112 via the power converter 122 and may be determined based on a plurality of control routines or regimen stored in a memory of the power converter controller 108 (not shown). They are accessible to a power converter controller 108 included in the power converter 122. The power converter controller 108 may include a plurality of processing cores, of which one core 110 is shown.

The system 100 further includes a diagnostics unit 104 that is communicatively coupled with the electric machine 102 and that may serve to obtain status data or status information from the electric machine 102. For example, the diagnostics unit 104 can be configured to retrieve or to instruct the electric machine 102 to send a set of sensor measurements 116, which may include, for example, and not by limitation, temperature, voltage, current, vibration, and insulation integrity data pertaining to the electric machine 102.

The diagnostics unit 104 includes a core 106 that can be a processor configured to execute at least one monitoring and diagnostics algorithm. As such, the diagnostics unit 104 may perform one or more diagnostics tests from the retrieved sensor measurements 116. For example, the diagnostics unit 104 may instruct the electric machine 102 to retrieve temperature data, and the diagnostics unit 104 may, via the core 106, compare the retrieved temperature data with a pre-determined temperature threshold stored in a memory (not shown).

Alternatively, or in addition to the aforementioned type of diagnostics test, the diagnostics unit 104 may be configured to compare the retrieved sensor measurements 116 with historical patterns of these sensor measurements 116. For example, the diagnostics unit 104 may be configured to compare retrieved temperature data with a 30-day average of previous temperature measurements.

Based on results of the diagnostics test, e.g., based on the results of the comparison, the diagnostics unit 104 can instruct, via a communication interface 130, the power converter controller 108 to alter a control regimen of the electric machine 102. For example, when the diagnostics unit 104 determines an insulation system degradation condition, by comparing the insulation data received with a threshold or with historical patterns, the diagnostics unit 104 may instruct the power converter controller 108 to reduce a voltage output of the power converter 122 (at one of the wires of the power bus 112) in order to extend the lifetime of the electric machine 102.

In yet another non-limiting example, when the diagnostics unit 104 detects a broken rotor bar condition in the electric machine 102 from the sensor measurements 116, the diagnostics unit 104 may instruct the power converter controller 108 via a communications interface 130 to reduce a motor torque (e.g., the power converter 122 output current on one of the wires of the power bus 112) of the electric machine 102. The diagnostics unit 104 can also be configured to monitor the control regimen of the electric machine 102 based on the sensor measurements 116 obtained from measurements from at least one of the current sensor 120 and the voltage sensor 124.

As such, the system 100 may, based on the operational data (which determines health and/or performance status) of the electric machine 102, dynamically calculate new reference or control parameters based on the asset's health or performance status. These parameters are then used in the power converter controller 108 to drive the electric machine 102 using the power converter 122. The diagnostics unit 104 may be self-contained, i.e., co-located with the electric machine 102, co-located within the power converter 122, or it may be external to electric machine 102, as shown in FIG. 1. In another embodiment, the diagnostics unit 104 may also be running on a core of the power converter controller 108.

Generally, in the system 100, the above-described dynamic parameter limiting is performed either to increase the lifetime of an asset by limiting selected control or reference parameters, or to optimize machine performance based on asset data. In the former case, the system 100 allows an increase in lifetime for the electric machine 102 by limiting the stress on the machine after a fault condition is identified. This is done by selectively limiting control parameters in real-time in order to increase overall availability and uptime of the machine and until the machine can be properly serviced by qualified repair personnel.

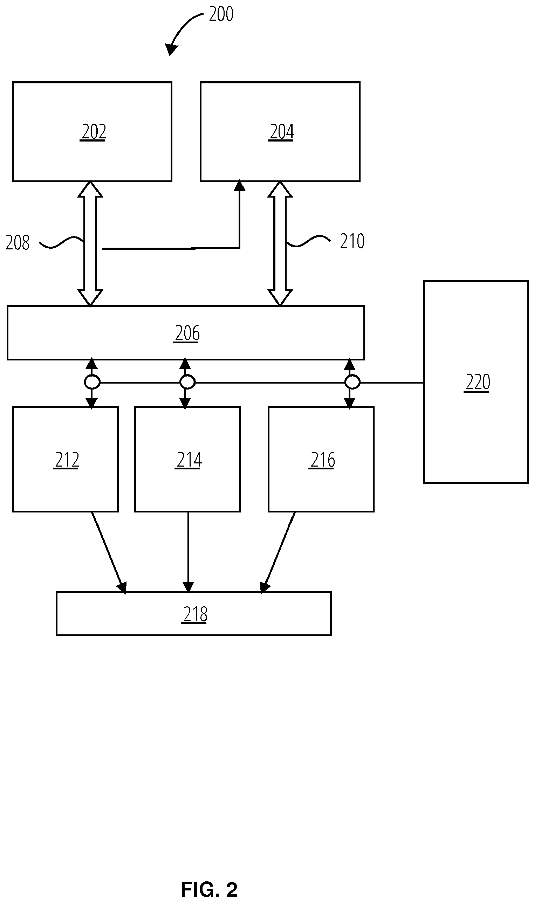

FIG. 2 illustrates a system 200 according to an embodiment. In the system 200, several electric machines (e.g., electric machines 212, 214, and 216) may be used to drive a load or group of loads 218. However, some of the aforementioned electric machines may be controlled via a driver, such as, without limitation a variable frequency drive 204, and others may be connected directly to an electric grid 202.

The system 200 further includes a controller 220 configured to fetch sensor measurements from each of the several electric machines, to perform diagnostics test on the sensor data or information from each of the several electric machines. The controller 220 may be further configured to communicate with a switch matrix 206. The switch matrix 206 may be configured as a by-pass module to allow a specified electric machine to connect to the variable frequency drive 204 via a variable frequency drive bus 210. Alternatively, the switch matrix 206 can allow the specified electric machine to be connected to the electric grid 202 via an electric grid bus 208.

In the system 200, the controller system 220 may be configured to manage the set of electric machines, based on their operational data. The controller system 220 may consequently extend the lifetime of each of the electric machines in the set. For example, the electric machine 212 may initially be connected to the electric grid 202.

When the controller 220 detects a fault condition in the electric machine 212, as discussed in the context of the diagnostics unit 104, the controller 220 may instruct the switch matrix 206 to disconnect the electric machine 212 from the electric grid 202. The controller 220 can subsequently connect the electric machine 212 to the variable frequency drive 204. At that point, a specific control regimen may be employed by the variable frequency drive 204 in order to mitigate the fault condition and prolong the lifetime of the electric machine 212.

In the system 200, the controller 220 may be a single device coupled to the electric machines and the switch matrix 206, as shown. In other implementations of the system 200, the controller 220 may be co-located with one of the electric machines or with the VFD 204. In yet other embodiment, each electric machine may have its own dedicated controller, which can be either embedded or external.

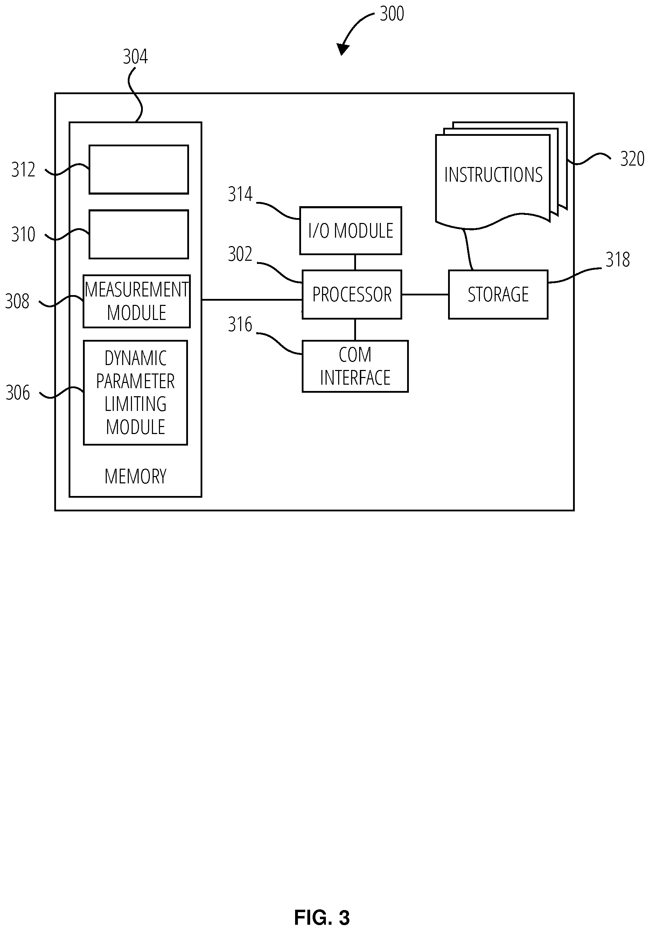

FIG. 3 shows a block diagram of controller 300, including a processor 302 having a specific structure. The specific structure is imparted to the processor 302 by instructions stored in a memory 304 included therein and/or by instructions 320 that can be fetched by the processor 302 from a storage medium 318. The storage medium 318 may be co-located with controller 300 as shown, or can be located elsewhere and be communicatively coupled to the controller 300. The controller 300 can be a stand-alone programmable system, or it can be a programmable module located in a much larger system. For example, the controller 300 may be integrated, i.e., embedded within an electric machine or within a power converter.

The controller 300 may include one or more hardware and/or software components configured to fetch, decode, execute, store, analyze, distribute, evaluate, diagnose, and/or categorize information. Furthermore, the controller 300 can include an (input/output) I/O module 314 configured to interface with a plurality of remote devices, such as a driver controller module of a variable frequency drive. The I/O module 314 can also interface with a switch matrix or a by-pass module. In one embodiment, the I/O module can include one or more data acquisition modules.

The processor 302 may include one or more processing devices or cores (not shown). In some embodiments, the processor 302 may be a plurality of processors, each having either one or more cores. The processor 302 can be configured to execute instructions fetched from the memory 304, i.e. from one of memory block 312, memory block 310, memory block 308, or memory block 306. The instructions can be fetched from storage medium 318, or from a remote device connected to controller 300 via communication interface 316.

Furthermore, without loss of generality, the storage medium 318 and/or the memory 304 may include a volatile or non-volatile, magnetic, semiconductor, tape, optical, removable, non-removable, read-only, random-access, or any type of non-transitory computer-readable computer medium. The storage medium 318 and/or the memory 304 may include programs and/or other information that may be used by the processor 302.

Moreover, the storage medium 318 may be configured to log data processed, recorded, or collected during the operation of the controller 300. For example, the storage medium 318 may store historical patterns, predetermined thresholds, for each of the measurable variables associated with one or more electric machines coupled to the controller 300. The data may be time-stamped, location-stamped, cataloged, indexed, or organized in a variety of ways consistent with data storage practice.

In one embodiment, the memory block 306 may be a dynamic parameter limiting memory module, and the memory block 308 may be a measurement memory module. As such, the controller 300 may fetch instructions from these modules, which, when executed by the processor 302, cause the processor 302 to perform certain operations.

The operations may include receiving status data from an electric machine coupled to the controller 300 through a plurality of sensors that terminate at the I/O module 314, for example. The operations may further include performing a diagnostic test on the status data, and subsequently instructing a driver of the electric machine to alter a control regimen of the electric machine based on results of the diagnostics test. The instructions can be sent though the communication interface 316, for example.

The status data may include measured data associated with at least one of a temperature of the electric machine, a vibrational signature of the electric machine, and an insulation integrity of the electric machine. The diagnostic test may include comparing the status data with either a historical pattern or a predetermined threshold, or both, based on information stored in the storage medium 318.

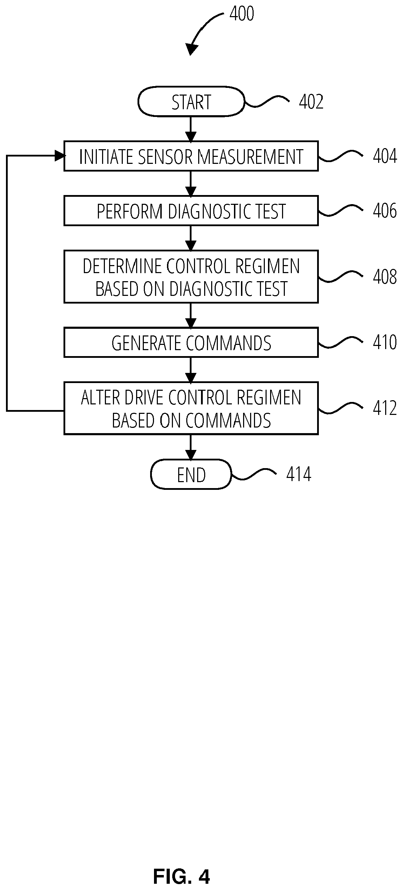

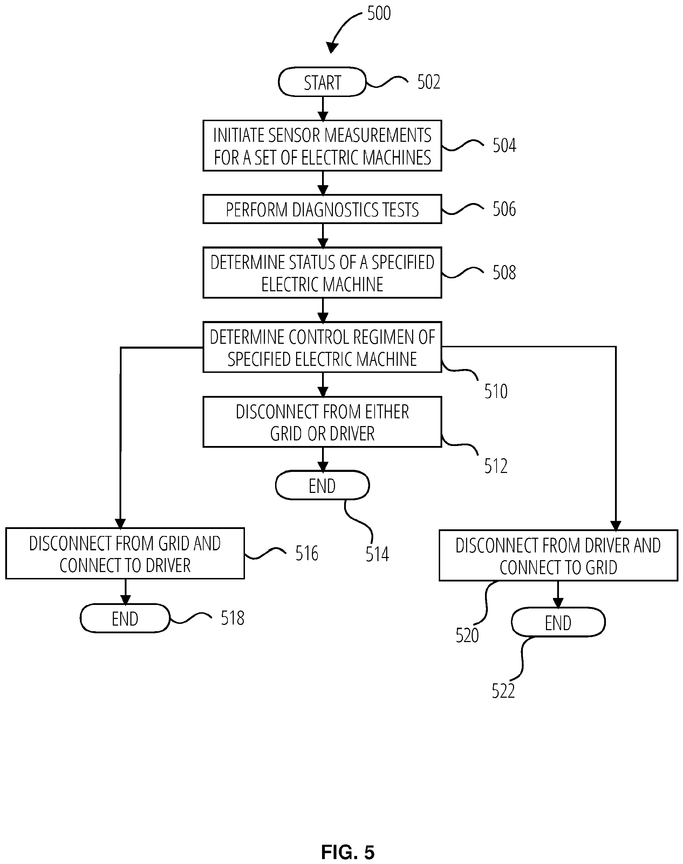

Having set forth several exemplary embodiments, example methods consistent with their operation are now presented with respect to FIG. 4 and FIG. 5. FIG. 5 describes a method 400 which can be executed, by the controller 300, for example. The method 400 begins at step 402, and it includes initiating one more sensor measurements (step 404). For example, the measurements may be initiated in response to the processor 302 issuing a command that instructs the various voltage and/or current sensors present on the power bus 112 to measure data from one or more wires of the power bus 112.

The method 400 further includes analyzing the sensor measurements by performing at least one diagnostic test (step 406), as described in the context FIGs. 1, 2, and 3. At step 408, the method 400 includes determining, based on at least one result of the diagnostic test, a desired control regiment for the electric machine. In response to the determination, the method 400 can include generating, by the controller 300, commands (step 410) that are configured to instruct a driver (e.g., power converter controller 108) of the electric machine to alter its control regimen of the electric machine (step 412). The method 400 can then end at step 414.

In yet another scenario, the embodiments described herein may be configured to execute the method 500, which begins at step 502. The method 500 may be used with a set of electric machines where each electric machine is either connected to an electric grid or to a driver, such as a VFD.

In the method 500, at step 504, a controller like the controller 300 may initiate sensor measurements from one or more electric machines in the set. Upon receiving the sensor measurements, the controller 300 can perform diagnostic tests on the sensor measurements respective to each electric machine in the set (step 506), and based on the diagnostic tests, the method 500 can include indicating that a specified electric machine is need for a control regimen change (step 508). At this point, the controller 300 can generate commands configured to alter the control regimen of the specified electric machine (step 510).

For example, depending on the results of the test associated with the specified electric machine at steps 506 and 508, the controller 300 can instruct the specified electric machine to disconnect from the grid (if it is connected thereto) and to connect to the driver (step 516). The method 500 can then end at step 518.

Alternatively, the controller 300 may instruct the specified electric machine to power off, i.e. to disconnect completely from either the electric grid or the driver (step 512), at which point the method 500 ends at step 514. Furthermore, the method 500 may instead include a step 520 where the specified electric machine is instructed to disconnect from the driver and connect to the grid, at which point the method 500 ends at step 522.

Generally, one embodiment based on the teachings disclosed herein include a system that may include an electric machine and/or a controller coupled to the electric machine. The controller may be configured to receive status data from the electric machine and perform a diagnostics test on the status. And based on the result of the diagnostic test, the controller can instruct a driver of the electric machine to alter a drive regimen of the electric machine.

The driver of the electric machine may be a variable frequency drive, and the status data may include measured data associated with at least one of a temperature of the electric machine, a vibrational signature of the electric machine, and an insulation integrity of the electric machine. The diagnostic test may include comparing the status data with historical patterns. In another embodiment, the diagnostic test may include comparing the status data with at least one predetermined threshold stored in a memory.

Furthermore, the diagnostic test may include detecting a condition of the electric machine. The condition may be, generally, any measureable state of the electric machine. For example, and without limitation, the condition may be either an insulation degradation condition in the electric machine, a shorted stator turn, eccentricity, or a broken rotor bar condition in the electric machine, as would readily be appreciated by one of skill in the art.

The controller is configured to instruct the driver to reduce a voltage across the electric machine when the condition is the insulation degradation condition. On the other hand, the controller is configured to instruct the driver to reduce a torque of the electric machine when the condition is the broken rotor bar condition.

Another exemplary embodiment includes a system that comprises a set of electric machines in which each electric machine is connectable and connected to either an electric grid or a driver. The system also includes a controller configured to receive status information from each electric machine in the set, and based on a diagnostics test on status information respective to a specified electric machine in the set, instruct the specified electric machine to disconnect from one of the electric grid and the driver and connect to the other one of the electric grid and the driver. The driver may be a variable frequency drive.

The specified electric machine may be instructed to connect to the variable frequency drive, and in addition, the controller can further provide a control instruction to the variable frequency drive. The control instruction is indicative of a control regimen to be undertaken by the variable frequency drive to control the specified electric machine.

Further, the status information may include measured data associated with at least one of a temperature of each electric machine in the set, a vibrational signature of each electric machine in the set, and an insulation integrity of each electric machine in the set. Furthermore, the diagnostic test may include comparing the status information respective to the specified electric machine with either a historical pattern or a predetermined threshold, or both.

Another exemplary embodiment may generally include a system that comprises a processor and a memory. The latter may include instructions that, when executed by the processor, cause the processor to perform certain operations. The operations may include receiving status data from an electric machine, performing a diagnostic test on the status data, and/or instructing a driver of the electric machine to alter a control regimen of the electric machine based on results of the diagnostic test.

The status data may include measured data associated with at least one of a temperature of the electric machine, a vibrational signature of the electric machine, and an insulation integrity of the electric machine. The diagnostic test may include comparing the status data with either a historical pattern or a predetermined threshold, or both.

Furthermore, the driver may be a variable frequency drive and the operations may include instructing the variable frequency drive to change a torque of the electric machine. In another case, the operations may include instructing the variable frequency drive to change a voltage of the electric machine.

Those skilled in the relevant art(s) will appreciate that various adaptations and modifications of the embodiments described above can be configured without departing from the scope and spirit of the disclosure. Therefore, it is to be understood that, within the scope of the appended claims, the teachings set forth in the present disclosure may be practiced other than as specifically described herein.

## Claims

1. A system (100), comprising:
a controller (300) configured to receive status data from an electric machine (102) and perform a diagnostic test on the status data, and based on a result of the diagnostics test, instruct a driver (108) of the electric machine (102) to alter a drive regimen of the electric machine (102).

2. The system (100) of claim 1, wherein the driver (108) of the electric machine (102) is a variable frequency drive.

3. The system (100) of claim 1, wherein the status data includes measured data associated with at least one of a temperature of the electric machine (102), a vibrational signature of the electric machine (102), an insulation integrity of the electric machine (102), a voltage of the electric machine (102), and a current of the electric machine (102).

4. The system (100) of claim 1 or 2, wherein the diagnostic test includes comparing the status data with at least one of historical patterns and at least one predetermined threshold stored in a memory (304).

5. The system (100) of any preceding claim, wherein the diagnostic test includes detecting a condition of the electric machine (102).

6. The system (100) of claim 5, wherein the condition is selected from the group consisting of an insulation degradation condition in the electric machine (102), a shorted stator turn, eccentricity, and a broken rotor bar condition.

7. The system (100) of claim 6, wherein the controller (300) is configured to instruct the driver (108) to reduce a voltage across the electric machine (102) when the condition is the insulation degradation condition.

8. The system (100) of claim 6 or 7, wherein the controller (300) is configured to instruct the driver (108) to reduce a torque of the electric machine (102) when the condition is the broken rotor bar condition.

9. The system (200) of any preceding claim, comprising:
a set of electric machines (212, 214, 216) in which each electric machine (212, 214, 216) is connectable to one of an electric grid (202) and a driver (204);
wherein the controller (300) is configured to receive status information from each electric machine (212, 214, 216) in the set (212, 214, 216), and based on a diagnostic test on status information respective to a specified electric machine (212) in the set (212, 214, 216), instruct to the specified electric machine (212) to disconnect from one of the electric grid (202) and the driver (204) and connect to the other one of the electric grid (202) and the driver (204).

10. The system of claim 9, wherein the controller (300) is further configured to instruct the specified electric machine (212) to power off.

11. The system of claim 9 or 10, wherein when the specified electric machine (212) is instructed to connect to a variable frequency drive, the controller (300) further provides a control instruction to the variable frequency drive.

12. The system of claim 11, wherein the control instruction is indicative of a control regimen to be undertaken by the variable frequency drive to control the specified electric machine (212).

13. A computer-implemented method, comprising:
receiving status data from an electric machine (102);
performing a diagnostics test on the status data; and
instructing a driver (108) of the electric machine (102) to alter a control regimen of the electric machine (102) based on results of the diagnostics test.

14. The system of claim 13, wherein the status data includes measured data associated with at least one of a temperature of the electric machine, a vibrational signature of the electric machine, an insulation integrity of the electric machine, a voltage of the electric machine, and a current of the electric machine.

15. The system of claim 13 or 14, wherein the diagnostic test includes comparing the status data with at least one of (i) a historical pattern and (ii) a predetermined threshold.
